## Europäisches Patentamt
## European Patent Office
## Office européen des brevets

(11) Veröffentlichungsnummer: **0 208 926**
**B1**

(12) **EUROPÄISCHE PATENTSCHRIFT**

(45) Veröffentlichungstag der Patentschrift:
12.09.90

(51) Int. Cl.⁵: **H04Q 1/14**

(21) Anmeldenummer: 86108128.9

(22) Anmeldetag: 13.06.86

(54) Steckbare Baugruppe mit elektrischen Sicherungselementen für Verteiler.

(30) Priorität: 15.07.85 DE 8520408 U
15.07.85 DE 3525233

(43) Veröffentlichungstag der Anmeldung:
21.01.87 Patentblatt 87/4

(45) Bekanntmachung des Hinweises auf die Patenterteilung:
12.09.90 Patentblatt 90/37

(84) Benannte Vertragsstaaten:
AT DE GB SE

(56) Entgegenhaltungen:
BE-A- 401 797
DE-A- 2 315 838
DE-A- 2 923 526
FR-A- 2 092 319
FR-A- 2 490 411
GB-A- 513 165

(73) Patentinhaber: Siemens Aktiengesellschaft,
Wittelsbacherplatz 2, D-8000 München 2(DE)

(72) Erfinder: Scholtholt, Hans, Ing. grad., Tannenstrasse 4,
D-8044 Lohof(DE)
Erfinder: Steiner, Ewald, Ing. grad., Fichtenweg 11,
D-8137 Berg 3(DE)

## Beschreibung

Die Erfinderung bezieht sich auf eine steckbare Baugrupppe mit elektrischen Sicherungselementen für Verteiler von Fernmelde-, insbesondere Fernsprechvermittlungsanlagen. Eine derartige Baugruppe ist z.B. durch die DE-PS 23 15 838 bekannt geworden. Danach weist die leistenartige Baugruppe eine Vielzahl von in einem Trägerteil teilweise eingebetteten, quer zur Längsrichtung verlaufenden gestanzten Leiterbahnen auf, die mit Ausnehmungen zur Aufnahme und zum Anlöten von Anschlußfahnen der Sicherungselemente versehen sind. Die Leiterbahnen sind im Bereich der Ausnehmungen zu der Bestückungsseite des Trägerteiles hin rechtwinkelig abgebogen. Die schlitzartigen Ausnehmungen befinden sich an den freien Enden der Abbiegungen. Die Sicherungselemente sind mit ihren Anschlußfahnen in diesen Ausnehmungen eingesetzt und verlötet. Um eine möglichst geringe Bauhöhe zu erreichen weist das Trägerteil für die Sicherungselemente Freimachungen in Form von Durchbrüchen auf, in die die Sicherungen teilweise hineinragen.

Ferner ist es durch die Unterlagen des deutschen Gebrauchsmusters 82 09 243 bekannt, die Leiterbahnen in das Trägerteil flach verlaufend einzubetten und die Anschlußfahnen der Sicherungselemente zu den Ausnehmungen hin abzubiegen. Im Bereich der Ausnehmungen der Leiterbahnen ist das Trägerteil mit Durchbrüchen versehen, so daß die Anschlußstellen von der Unterseite der Baugruppen her zugänglich sind und das Anschließen z.B. durch Schwallöten erfolgen kann. Dabei besteht jedoch die Gefahr, daß die durch die Ausnehmungen hindurchragenden Enden der Anschlußfahne über die Unterseite der Baugruppe hinausragen, was zu Fehlkontaktierungen führen kann.

Der Erfindung liegt die Aufgabe zugrunde, eine Baugruppe zu schaffen, die die Anschlußarbeiten erleichtert und bei der die Gefahr von Fehlkontaktierungen verringert wird.

Diese Aufgabe wird durch die Erfindung gemäß Anspruch 1 gelöst. Durch die schräge oder parallele Ausbiegung der Leiterbahnen im Bereich der Ausnehmungen bleiben die Lötstellen von der den Sicherungselementen abgewandten Seite der Baugruppe her zugänglich. Damit bleibt die Anwendbarkeit von Tauch- oder Schwallötverfahren erhalten. Durch das Zurücksetzen der Ausnehmungen gegenüber der Baugruppenunterseite können auch die durch die Ausnehmungen hindurchragenden Enden der Anschlußfahnen so weit zurückgenommen werden, daß sie nicht mehr über die Unterseite der Baugruppe hinausragen. Es ist sogar möglich, auf das Abschneiden der Anschlußfahnen nach dem Einlöten zu verzichten.

Vorteilhafte Weiterbildungen der Erfindung sind in den Ansprüchen 2 bis 9 gekennzeichnet:

Durch die trapezförmige Ausbiegung der Leiterbahnen nach Anspruch 2 können diese zu beiden Seiten des Durchbruchs im Trägerteil fest verankert werden.

Durch die Weiterbildung nach Anspruch 3 wird die Anzahl der Ausbiegungen und Durchbrüche verringert.

Durch die Weiterbildung nach Anspruch 4 können die Anschlußfahnen aus verschiedenen Richtungen an die Ausnehmungen herangeführt werden. Diese können nun mit engerem Abstand angeordnet werden, so daß sich die Ausdehnung der Anschlußzone verringert. Außerdem können die Anschlußfahnen der zu beiden Seiten der Durchbrüche angeodneten Sicherungselemente geradlinig zu den Anschlußstellen geführt werden.

Die Weiterbildungen nach den Ansprüchen 5 und 6 ermöglichen eine einfache Ausbildung des Trägerteiles und eine gute Zugänglichkeit der Lötstellen für den Lotschwall.

Die kompakte Anordnung der Anschlußstellen für die Anschlußfahnen und die Anordnung der Sicherungselemente nach den Ansprüchen 7, 8 und 9 ermöglicht es, in Trägerteilen gleichen Typs entweder zwei einzelne Überspannungsableiter mit zwei Varistoren oder einen 3-Elektroden-Ableiter mit zwei Varistoren unterzubringen. Dabei ermöglicht die drehsymmetrische Anordnung bei zwei Überspannungsableitern eine symmetrische Anordnung der Leiterbahnen, von denen die mittlere geerdet ist. Diese Anordnung eignet sich zugleich für einen 3-Elektroden-Ableiter, bei dem die zu erdende Elektrode in der Mitte liegt.

Im folgenden wird die Erfindung anhand eines in der Zeichnung dargestellten Ausführungsbeispieles näher erläutert.

Fig. 1 zeigt eine Draufsicht auf eine steckbare Baugruppe mit elektrischen Sicherungselementen,
Fig. 2 einen Schnitt entlang der Linie II-II in Fig. 1,
Fig. 3 einen Schnitt entlang der Linie III-III in Fig. 1.

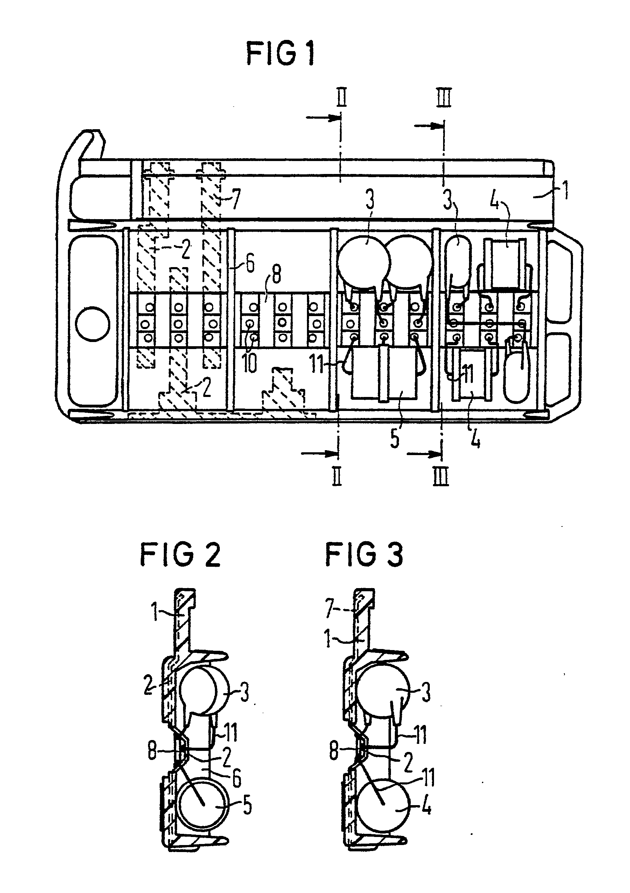

Nach den Fig. 1, 2 und 3 besteht Baugruppe für Verteiler von Fernsprechvermittlungsanlagen aus einem Trägerteil 1, darin teilweise eingebetteten Leiterbahnen 2, Varistoren 3, und Überspannungsableitern 4, 5. Die Varistoren 3 und Überspannungsableiter 4 bilden Sicherungselemente für die Teilnehmerleitungen des Verteilers. Die Überspannungsableiter dienen dem Grobschutz zur Ableitung von energiereichen Strömen. Die Varistoren dienen dem Feinschutz der Vermittlungsanlage durch Ableitung von energiearmen Ladungen, wie sie z.B. durch elektrostatische Aufladung entstehen.

Je nach Kundenwunsch können für einen Teilnehmer zwei Einzelüberspannungsableiter 4 oder ein 3-Elektroden-Ableiter 5 vorgesehen werden. Der 3-Elektroden-Ableiter 5 hat die gleiche Funktion wie zwei einzelne Ableiter 4.

Das Trägerteil 1 ist durch Zwischenstege 6 in einzelne Aufnahmekammern für die Sicherungselemente unterteilt. Jede Aufnahmekammer nimmt die Sicherungselemente für einen Teilnehmer auf. Jeder Aufnahmekammer sind drei Leiterbahnen 2 zugeordnet. Dabei ist die mittlere Leiterbahn an Erdpotential gelegt. Die äußeren Leiterbahnen 2 führen zur gegenüberliegenden Seite der Baugruppe und bilden dort Steckkontaktflächen 7 für Federkontakte des Verteilers. Diese Federkontakte sind mit den Teilnehmerleitungen elektrisch verbunden.

Das Trägerteil 1 ist mit einem sich in Längsrichtung erstreckenden Durchbruch 8 versehen, durch den die Leiterbahnen 2 von der den Sicherungselementen abgewandten Seite der Baugruppe her für einen Lotschwall zugänglich sind. Im Bereich des Durchbruchs 8 sind die Leiterbahnen 2 trapezförmig zur Bestückungsseite der Baugruppe hin ausgebogen. Die beidseitig der Ausbiegung im Trägerteil verankerten Leiterbahnen 2 sind im Bereich der Ausbiegung mit lochförmigen Ausnehmungen 10 zur Aufnahme der Enden von Anschlußfahnen 11 der Sicherungselemente 3, 4, 5 versehen. Die Ausnehmungen 10 befinden sich in allen drei Schenkeln der Ausbiegung, so daß zumindest ein Teil der Anschlußfahnen 11 geradlinig zu den Ausnehmungen 10 geführt werden kann.

Durch die Ausbiegung weisen die durch die Ausnehmung hindurchragenden Enden der Anschlußfahnen 11 einen hinreichen den Abstand zur Unterseite der Baugruppe auf, so daß sichergestellt ist, daß es nicht zu Fehlkontaktierungen kommen kann.

## Patentansprüche

1. Steckbare Baugruppe mit elektrischen Sicherungselementen für Verteiler von Fernmelde-, insbesondere Fernsprechvermittlungsanlagen, wobei die leistenartige Baugruppe eine Vielzahl von in einem Trägerteil (1) zumindest teilweise eingebetteten, quer zur Längsrichtung verlaufenden gestanzten Leiterbahnen (2) aufweist, die mit Ausnehmungen (10) zur Aufnahme und zum Anlöten von Anschlußfahnen der Sicherungselemente versehen sind, wobei die Leiterbahnen im Bereich der Ausnehmungen zu der Bestückungsseite des Trägerteiles hin ausgebogen sind und wobei das Trägerteil im Bereich der Ausnehmungen mit Durchbrüchen (8) versehen ist,
**dadurch gekennzeichnet,**
daß die Leiterbahnen (2) im Bereich der Ausnehmungen (10) parallel und/oder schräg zur Bestückungsseite verlaufen und von der anderen Seite der Baugruppe her durch die unverdeckten Durchbrüche (8) frei zugänglich sind.
2. Baugruppe nach Anspruch 1,
**dadurch gekennzeichnet,**
daß die Leiterbahnen (2) im Bereich der lochförmigen Ausnehmungen (10) trapezförmig gebogen und zu beiden Seiten der Ausbiegung im Trägerteil (1) verankert sind.
3. Baugruppe nach Anspruch 2,
**dadurch gekennzeichnet,**
daß im Bereich der trapezförmigen Ausbiegungen jeweils mehrere Ausnehmungen (10) angeordnet sind.
4. Baugruppe nach Anspruch 3,
**dadurch gekennzeichnet,**
daß die Ausnehmungen (10) in den schräg verlaufenden Seitenschenkeln der Ausbiegungen angeordnet sind.
5. Baugruppe nach einem der vorhergehenden Ansprüche,
**dadurch gekennzeichnet,**

daß die Ausbiegungen aller Leiterbahnen (2) und die zugehörigen Durchbrüche (8) in der Längsrichtung der Baugruppe fluchtend angeordnet sind.
6. Baugruppe nach Anspruch 5,
**dadurch gekennzeichnet,**
daß für mehrere oder alle Ausbiegungen ein durchgehender Durchbruch (8) vorgesehen ist.
7. Baugruppe nach einem der vorhergehenden Ansprüche,
**dadurch gekennzeichnet,**
daß auf der Bestückungsseite der Baugruppe für jeweils ein Teilnehmerleitungspaar zwei Überspannungsableiter (4) und zwei Varistoren (3) in einer Aufnahmekammer vorgesehen sind, in der die Varistoren und Überspannungsableiter diagonal gegenüberliegend angeordnet sind.
8. Baugruppe nach einem der vorhergehenden Ansprüche,
**dadurch gekennzeichnet,**
daß die Sicherungselemente zu beiden Seiten der Ausbiegungen angeordnet sind.
9. Baugruppe nach Anspruch 7 oder 8,
**dadurch gekennzeichnet,**
daß jeweils eine mit Erde verbundene Leiterbahn (2) in der Mitte der Aufnahmekammer verläuft und daß sich jeweils zwei mit den Teilnehmerleitungen verbundene Leiterbahnen (2) zu beiden Seiten der geerdeten Leiterbahn erstrecken.

## Claims

1. Plug-in assembly with electric fuse elements for distributors of telecommunications systems, preferably telephone exchange systems, the strip-like assembly having a plurality of stamped conductor paths (2) extending transversely to the longitudinal direction, at least partially embedded in a carrier component (1), and provided with cutouts (10) for accommodating and soldering connecting lugs of the fuse elements, the conductor paths being deflected in the region of the cutouts towards the component side of the carrier component, and the carrier component being provided with openings (8) in the region of the cutouts, characterized in that in the region of the cutouts (10) the conductor paths (2) extend parallel and/or obliquely to the component side and are freely accessible through the uncovered openings (8) from the other side of the assembly.
2. Assembly according to Claim 1, characterized in that in the region of the hole-shaped cutouts (10) the conductor paths (2) are trapezoidally bent and anchored in the carrier component (1) on both sides of the deflection.
3. Assembly according to Claim 2, characterized in that a plurality of cutouts (10) are respectively arranged in the region of the trapezoidal deflections.
4. Assembly according to Claim 3, characterized in that the cutouts (10) are arranged in the obliquely extending side legs of the deflections.
5. Assembly according to one of the preceding claims, characterized in that the deflections of all the conductor paths (2) and the assigned openings (8) are arranged aligned in the longitudinal direction of the assembly.

6. Assembly according to Claim 5, characterized in that a continuous opening (8) is provided for a plurality of or all deflections.

7. Assembly according to one of the preceding claims, characterized in that on the component side of the assembly there are provided two surge arresters (4) and two varistors (3) in a receiving chamber for each pair of subscriber lines, in which chamber the varistors and the surge arresters are arranged diagonally opposite.

8. Assembly according to one of the preceding claims, characterized in that the fuse elements are arranged on both sides of the deflections.

9. Assembly according to Claim 7 or 8, characterized in that a conductor path (2) connected to earth runs in the centre of each receiving chamber and that two conductor paths (2) connected to the subscriber lines respectively extend on both sides of the earthed conductor path.

**Revendications**

1. Unité enfichable à éléments électriques de sécurité pour des répartiteurs de centraux de télécommunications, en particulier de centraux téléphoniques, du type dans lequel l'unité en forme de réglette comporte des pistes conductrices (2) découpées à la matrice, qui s'étendent transversalement à la direction longitudinale et qui sont noyées au moins partiellement dans un élément de support (1), lesdites pistes conductrices étant pourvues d'ouvertures (10) destinées à recevoir et au soudage de languettes de raccordement des éléments de sécurité, alors que lesdites pistes conductrices sont incurvées dans les zones des ouvertures, en direction du côté de l'élément de support qui reçoit les composants, et que l'élément de support est pourvu, dans la zone des ouvertures, de perçages (8), caractérisée par le fait que les pistes conductrices (2) s'étendent, dans la zone des ouvertures (10), parallèlement et/ou obliquement par rapport au côté destiné à recevoir les composants, et sont librement accessibles à partir de l'autre côté de l'unité, à travers les perçages non recouverts (8).

2. Unité enfichable selon la revendication 1, caractérisée par le fait que les pistes conductrices (2) sont, dans la zone des ouvertures (10) en forme de trous, incurvées avec une forme trapézoïdale et elles sont ancrées, des deux côtés de la partie incurvée, dans l'élément de support (1).

3. Unité enfichable selon la revendication 2, caractérisée par le fait que dans la zone des parties incurvées de forme trapézoïdale, sont prévues plusieurs ouvertures (10).

4. Unité enfichable selon la revendication 3, caractérisée par le fait que les ouvertures (10) sont disposées dans les branches latérales et obliques des parties incurvées.

5. Unité enfichable selon l'une des revendications précédentes, caractérisée par le fait que les parties incurvées de toutes les pistes conductrices (2) et les ouvertures associées (8), sont disposées en alignement dans la direction longitudinale de ladite unité enfichable.

6. Unité enfichable selon la revendication 5, caractérisée par le fait que l'on prévoit une ouverture traversante (8) pour plusieurs ou pour toutes les parties incurvées.

7. Unité enfichable selon l'une des revendications précédentes, caractérisée par le fait que sur le côté de l'unité enfichable qui est destinée à recevoir les composants, il est prévu par paires de lignes d'abonnés, deux dérivateurs de surtension (4) et deux varistors (3) dans une chambre de réception dans laquelle les varistors et les dérivateurs de surtension se situent diagonalement l'un en face de l'autre.

8. Unité enfichable selon l'une des revendications précédentes, caractérisée par le fait que les éléments de sécurité sont disposés de part et d'autre des parties incurvées.

9. Unité enfichable selon la revendication 7 ou 8, caractérisée par le fait que respectivement l'une des pistes conductrices (2) qui est reliée à la terre, s'étend au milieu de la chambre de réception, et que deux pistes conductrices (2) qui sont reliées aux lignes d'abonnés, s'étendent de part et d'autre de la piste conductrice mise à la terre.

# FIG 1

# FIG 2

# FIG 3